# EUROPÄISCHE PATENTSCHRIFT

(11) **EP 0 936 388 B1**
(45) Veröffentlichungstag und Bekanntmachung des Hinweises auf die Patenterteilung: **02.01.2003**
(21) Anmeldenummer: 99101000.0
(22) Anmeldetag: 21.01.1999
(51) Int. Cl.: F16L 3/233, F16L 33/02, F16B 21/16

(54) **Kabelbinder aus Metall**
Metallic cable tie
Serre-câble métallique

(30) Priorität: 10.02.1998 DE 19805062
(43) Veröffentlichungstag der Anmeldung: 18.08.1999
(73) Patentinhaber: Krister Gamaggio-Schäfer, 60598 Frankfurt (DE)
(72) Erfinder: Krister Gamaggio-Schäfer, 60598 Frankfurt (DE)
(74) Vertreter: Gallo, Wolfgang, Dipl.-Ing. (FH)

(56) Entgegenhaltungen:
- EP-A- 0 758 616
- US-A- 4 399 592
- US-A- 4 930 548
- US-A- 5 291 637
- PATENT ABSTRACTS OF JAPAN vol. 095, no. 010, 30. November 1995 & JP 07 187220 A (TOKYO KOKEN KK), 25. Juli 1995

## Beschreibung

Die Erfindung betrifft einen metallenen Kabelbinder, bestehend aus einem flachen Metallband, das um das zu fixierende Kabel bzw. Kabelbündel zu legen ist, und einem an einem Ende des Metallbands angeordneten Kopfstück zum Hindurchziehen und Arretieren des freien Endes des Metallbands, wobei das Kopfstück als Metallkapsel ausgebildet ist, die eine entgegen der Durchzugsrichtung des freien Metallbandendes konisch verjüngte Kammer bildet und eine Sperrkugel beherbergt. Die Sperrkugel ist in der Kammer zwischen einer Lösestellung im weiteren Bereich der Kammer, wo sie das Durchziehen des Metallbands durch den Kopf ermöglicht, und einer Sperrstellung im engeren Bereich der Kammer um eine kleine Distanz beweglich, wo sie sich zwischen die konische Kammerwand und das Metallband klemmt und als Sperrkeil wirkt, um ein Zurückrutschen des Metallbands unter dem Einfluß der auf dieses wirkenden Spannkraft zu verhindern.

Ein derartiger metallener Kabelbinder ist aus dem US-Patent 4 399 592 bekannt. Das Kopfstück ist als gebogenes Blechteil mit durch Tiefziehen angeformter Kapselpartie ausgebildet, die nach vorne offen ist und eine gestanzte, nach Einsetzen der Sperrkugel zum Rückhalten der Kugel in der Kapsel umgebogene Lasche aufweist. Das eine Ende des Metallbands ist im unteren Teil des Kopfstücks verrastet, dessen oberer Teil durch die Kapsel gebildet ist. Die Höhe der Kapsel reicht gerade aus, um die Kugel mit dem notwendigen Bewegungsspiel in der Lösestellung aufzunehmen, und die Deckwand der Kapsel verläuft konisch, um mit der Sperrkugel klemmend zusammenzuwirken.

Noch ein derartiger metallener Kabelbinder ist aus Dokument JP-A-07187220 bekannt. Die Kapsel weist an ihrem im Querschnitt verengten Ende eine das Einfühzen eines Werkzengs Zum Herausdrücken der Spezzkugel aus ihrer Klemmposition ermöglichende Öffnung auf.

Der Erfindung liegt die Aufgabe zugrunde, einen metallenen Kabelbinder der beschriebenen Gattung so auszubilden, daß die Arretierung des durchgezogenen freien Metallbandendes im Kopfstück durch die Sperrkugel mit größerer Haltesicherheit erfolgt und insbesondere auch unter dem Einfluß von Erschütterungen, Schwingungen, Temperaturwechseln und anderen Einflüssen erhalten bleibt, andererseits die Arretierung aber bei Bedarf auch leicht lösbar ist.

Diese Aufgabe wird gemäß der Erfindung durch die im Anspruch 1 angegebene und in den Unteransprüchen vorteilhaft weiter ausgestaltete Konstruktion gelöst.

Dadurch tritt bei dem erfindungsgemäßen Metallkabelbinder eine echte Verrastung der Sperrkugel in der Sperrstellung ein, im Gegensatz zu einer bloßen Verklemmung bei herkömmlichen Kabelbindern dieser Gattung.

Ein Ausführungsbeispiel der Erfindung ist in den anliegenden Zeichnungen dargestellt und wird nachstehend in seinen wesentlichen Einzelheiten beschrieben. In den Zeichnungen zeigt:
- Fig. 1: Den Kabelbinder nach der Erfindung im Längsschnitt,
- Fig. 2: einen Querschnitt längs der Linie A-A in Fig. 1,
- Fig. 3: eine Draufsicht auf den Kabelbinder
- Fig. 4: einen Querschnitt längs der Linie B-B in Fig. 1,
- Fig. 5: einen Querschnitt längs der Linie C-C in Fig. 1, und
- Fig. 6: eine Untersicht des Kabelbinders.

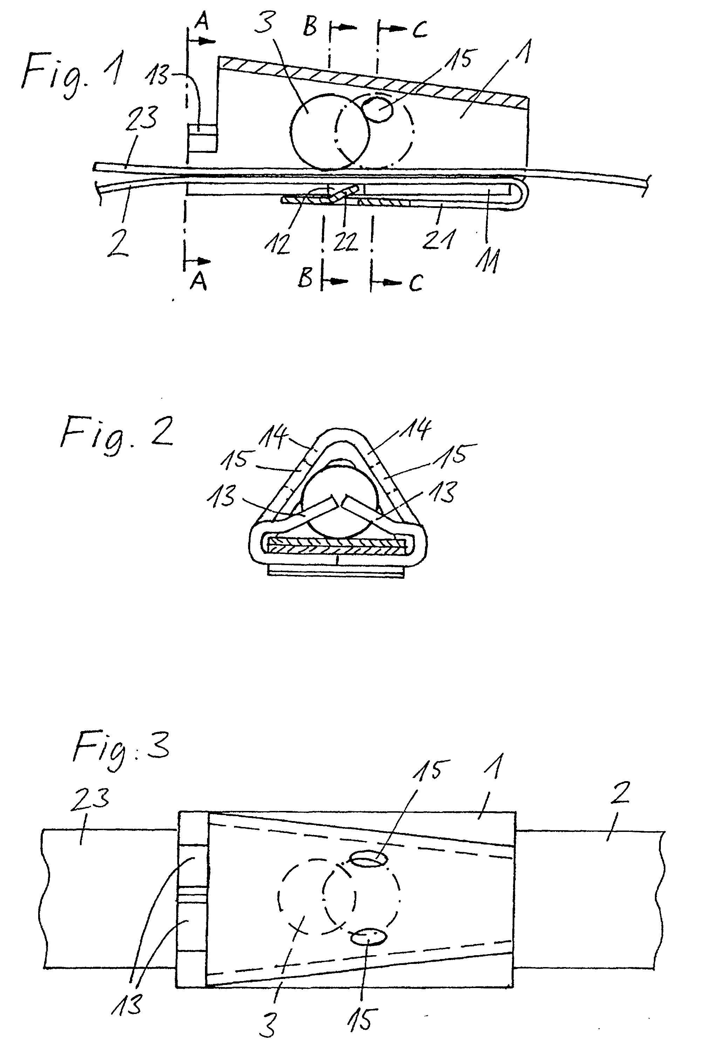

Figur 1 zeigt im Längsschnitt das als Blechteil gestanzte und gebogene Kopfstück 1 des Kabelbinders mit dem metallenen Spannband 2 dessen hinteres Ende 21 um den Boden 11 des Kopfstücks 1 herumgebogen und mit einer ausgestanzten Lasche 22 in einer Öffnung 12 des Bodens 11 des Kopfstücks eingebogen und dadurch in seiner Position gesichert ist. Das vordere Ende 23 des Spannbands 2 ist über dem umgebogenen hinteren Spannbandende 21 durch das Kopfstück 1 hindurchgeschoben. Das Kopfstück 1 ist, wie die Figuren 1 bis 3 im Längsschnitt in Stirnsansicht aus der Ebene A-A in Figur 1 und in Draufsicht zeigen, als längliche Kapsel mit etwa dreieckförmigem Querschnitt (Fig. 2) ausgebildet, der sich von vorn (Ebene A-A in Figur 1) nach hinten in Breite und Höhe verjüngt (Figur 1 und Figur 3) und eine Sperrkugel 3 aufnimmt. Am vorderen Ende des Kopfstücks sind zwei entsprechend gestanzte und gebogene Laschen 13 so angeordnet (siehe Figur 2), daß sie ein Herausfallen der Sperrkugel 3 am vorderen Ende verhindern; das hintere Ende der Kapsel ist zu eng, um einen Austritt der Sperrkugel 3 zu ermöglichen.

Wie gesagt, ist die durch das Kopfstück 1 gebildete Kapsel für die Sperrkugel 3 im Querschnitt etwa dreieckförmig, wie Figur 2 zeigt, und weist zwei satteldachartig verlaufende Seitenwände 14 auf, welche zwei Dreieckseiten bilden, während die dritte Dreieckseite durch den Boden 11 des Kopfstücks 1 gebildet ist. In den beiden Seitenwänden 14 ist jeweils eine Bohrung 15 angeordnet, die in den Figuren 1 bis 3 jeweils sichtbar sind.

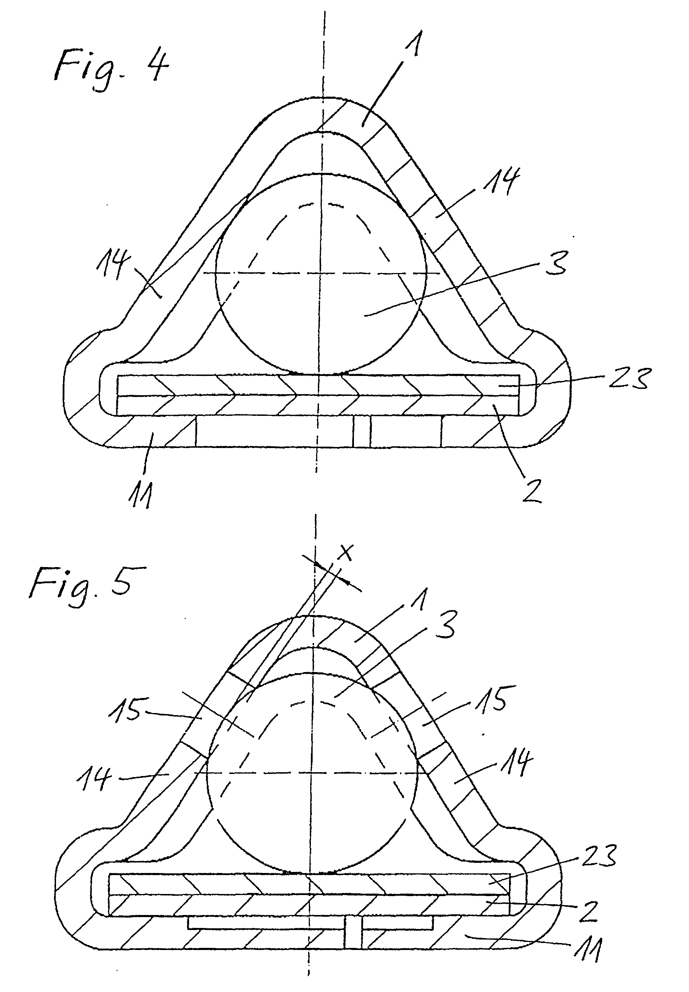

Anhand der Figuren 4 und 5, die Schnitte längs der Ebenen B-B bzw. C-C in Figur 1 zeigen, wird nun die Funktion des erfindungsgemäßen Kabelbinders im einzelnen erläutert.

Fig. 4 zeigt im (vergrößerten) Querschnitt die durch das Kopfteil 1 gebildeten Kapsel mit der Sperrkugel 3 in einer Grenzposition, wo die Sperrkugel bereits an den Seitenwänden 14 des Kopfteils 1 sowie an der Oberseite des vorderen Spannbandendes 23 innerhalb des Kopfteils Berührung hat.

Dargestellt ist also die Sperrkugel 3 in derjenigen Position, in der sie in Fig. 1 in Vollinien eingezeichnet ist. Wie man in Fig. 1 sieht, kann die Sperrkugel 3 sich in der Kapsel noch weiter nach vorne (d.h. in Richtung auf die Ebene A-A) hinbewegen, also zum weiter erweiterten Ende der Kapsel hin und hat dort Bewegungsspielraum so daß das Spannband 2 mit seinem vorderen Endteil 23 ohne wesentlichen Widerstand durch das Kopfteil hindurchgezogen werden kann.

Ausgehend von der in Fig. 4 gezeigten Stellung der Sperrkugel 3 und bei gespanntem Spannband 2, das die Tendenz hat, sich wieder nach Rückwärts aus dem Kopfteil 1 herauszuverschieben, wird nun durch die berührungsbedingte Reibung der Sperrkugel 3 3 an den genannten Fläche diese von dem zurückrutschenden Spannband mitgenommen, bis die Sperrkugel 3 eine feste Verklemmung zwischen den seitlichen Kapselwänden 14 und der Oberseite des Spannbands bewirkt und dadurch ein weiteres Zurückrutschen des Spannbands unterbindet. Wegen der Dreiecksgeometrie der vom Kopfteil 1 gebildeten Kapsel können die Seitenwände 14 sich etwas elastisch ausbauchen, wodurch es möglich ist, daß die Sperrkugel 3 sich soweit zurückbewegt, bis sie mit seitlichen Bereichen in die in den Seitenwänden 14 gebildete Öffnungen 15 einrastet und damit in der Klemmstellung arretiert ist. Diese Position der Sperrkugel 3 zeigt Figur 5. In Figur 5 ist auch die Distanz x dargestellt, mit welcher die Sperrkugel in die Öffnungen 15 hineinragt.

Diese Arretierung der Sperrkugel in der Sperrstellung ist, wie gesagt, durch die elastische Verformbarkeit der Seitenwände 14 möglich und bewirkt, daß die Sperrkugel nicht durch Erschütterungen, Vibrationen oder sonstige Bewegungen des gespannten Spannbands sich aus der Lösestellung löst und damit ein unbeabsichtigtes Zurückrutschen des Spannbands im Kopfstück und damit ein Lösen des Kabelbinders eintritt.

Soll der Kabelbinder gelöst werden, kann durch das offene engere Ende der Kapsel (das von der Ebene A-A in Fig. 1 abgewandte Ende des Kopfstücks) mit Hilfe eines Schraubenziehers oder eines sonstigen länglichen Gegenstands die Sperrkugel 3 aus ihrer Rastposition herausgedrückt werden, so daß sich dann das Spannband leicht lösen und bei späterem Wiederspannen in der gleichen Weise wieder verrasten läßt.

Die in Fig. 1 sichtbare Sicherungslasche 22 am umgebogenen hinteren Ende des Spannbands 2, die in eine Öffnung 12 des Kapselbodens 11 eingreift, ist vorzugsweise so bemessen und positioniert, daß sie einen Druck gegen das über dem Kapselboden verlaufende Spannband 2 ausübt und das Spannband dort etwas nach oben wölbt. Diese Wölbung kann im Zuge der Montage des Kabelbinders im Spannband vorgeformt werden. Dadurch ergibt sich ein zusätzlicher Sicherungseffekt auf die Sperrkugel 3, weil die Sperrkugel 3 in der Verrastungsstellung, wie auch Fig. 1 zeigt, über eine solche kleine Wölbung zurückgerutscht ist.

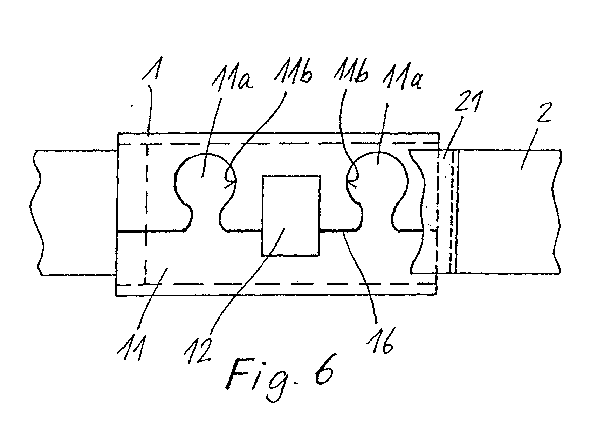

Figur 6 zeigt eine Untersicht des Kabelbinders, wobei das hintere Ende 21 des Spannbands 2 so abgebrochen ist, daß man die Ausbildung des Bodens 11 der Kapsel erkennt. Das Kopfstück 1 besteht aus einem gebogenen Blechteil, wobei die Fuge zwischen den zusammenstoßenden Blechteilrändern in Längsrichtung durch den Boden 11 verläuft und mit 16 bezeichnet ist. Diese beiden aneinander stoßenden Blechränder sind miteinander verstemmt, indem am einen Blechrand Laschen 11a geformt und im anderen Blechrand dazu komplementäre Öffnungen 11b so eingestanzt sind, daß diese formschlüssig ineinander greifen. Damit wird erreicht, daß die Kapsel sich in ihrer Gesamtgeometrie auch unter den einwirkenden Druck der Sperrkugel 3 in der Klemmposition nicht verändern kann und damit eine dauerhaft sichere Arretierfunktion gewährleistet ist. Obwohl die dargestellte und vorstehend beschriebene Ausführungsform als zu bevorzugende Konstruktion angesehen wird, ist auch eine die gleiche Funktion gewährleistende abgewandelte, jedoch nicht dargestellte Konstruktion des Käfigs mit etwa rechteckigem oder trapezförmigem Querschnitt denkbar, bei welchem die obere Deckwand von vorn nach hinten mit sich verringernder Distanz zum Boden verläuft und eine Bohrung bzw. Öffnung analog den Öffnungen 15 beim dargestellten Ausführungsbeispiel aufweist, die zum Verrasten der Sperrkugel in der Klemmposition dient.

## Patentansprüche

1. Kabelbinder aus Metall, bestehend aus einem metallenen Spannband (2) und einem aus Metallblech gestanzten und geformten Kopfstück (1) in Gestalt einer länglichen Kapsel, die eine Sperrkugel (3) aufnimmt, wobei das mit seinem hinteren Ende (21) an Kapselboden (11) des Kopfstücks (1) festgelegte Spannband (2) mit seinem freien Ende (23) über dem Kapselboden (11) in Längsrichtung durch die Kapsel hindurchschiebbar ist, und wobei die Kapsel sich entgegen der Durchzugsrichtung des freien Spannbandendes (23) von einem die Sperrkugel (3) mit Spiel aufnehmenden Querschnitt auf einen kleineren, das Festklemmen der Sperrkugel zwischen dem eingeführten freien Spannbandende (23) und den gegenüberliegenden Kapselwänden bewirkenden Querschnitt verengt und die Kapsel an ihrem den weiteren Querschnitt aufweisenden Ende mindestens ein das Herausfallen der Sperrkugel (3) verhinderndes Element (13) aufweist und wobei die Kapsel an ihrem im Querschnitt verengten Ende eine das Einführen eines werkzeugs zum Herausdrücken der Sperrkugel (3) aus ihrer Klemmposition ermöglichende Öffnung aufweist, **dadurch gekennzeichnet, daß** die Konfiguration der Querschnittsform der Kapsel eine gewisse elastische Auslenkung mindestens einer dem Kapselboden (11) gegenüberliegenden Kapselwand zuläßt und diese Kapselwand (14) in der Klemmposition der Sperrkugel (3) mit dem hindurchgeführten freien Spannbandende (23) eine Öffnung (15) aufweist, in welche die Sperrkugel (3) in ihrer Klemmposition einrastbar ist.

2. Kabelbinder nach Anspruch 1, **dadurch gekennzeichnet, daß** die Kapsel eine etwa dreieckförmige Querschnittsgeometrie mit zwei über dem Kapselboden (11) satteldachartig verlaufenden Seitenwänden (14) hat und in jeder dieser beiden Seitenwände eine Öffnung (15) zum Verrasten der Sperrkugel (3) gebildet ist.

3. Kabelbinder nach Anspruch 1, **dadurch gekennzeichnet, daß** die Kapsel eine etwa rechteckige oder trapezförmige Querschnittsgeometrie mit zwei Seitenwänden und einer im Kapselboden gegenüberliegenden Deckwand hat und die Deckwand zur Verringerung des Kapselquerschnitts entlang der Kapsellänge schräg zum Kapselboden (11) verläuft und mit der Öffnung zum Verrasten der Sperrkugel (3) versehen ist.

4. Kabelbinder nach einem der Ansprüche 1 bis 3, **dadurch gekennzeichnet, daß** das im Querschnitt größere Stirnende der Kapsel durch eingebogene Laschen versperrt ist, die an den entsprechenden Enden der Kapselseitenwände gestanzt bzw. angeformt sind.

5. Kabelbinder nach einem der Ansprüche 1 bis 4, **dadurch gekennzeichnet, daß** das hintere Ende (21) des Spannbands (2) durch das Kopfstück (1) hindurchgeführt und um den Kapselboden (11) herumgebogen ist und mit einer biegegestanzten Lasche (22) arretierend in eine Kapselbodenöffnung (12) greift und daß die Öffnung (12) im Kapselboden (11) eine Durchgangsöffnung ist und die biegegestanzte Lasche (22) durch die Kapselbodenöffnung (12) hindurch gegen das auf der Kapselinnenseite über den Kapselboden verlaufende Spannband (2) drückt.

6. Kabelbinder nach einem der Ansprüche 1 bis 5, **dadurch gekennzeichnet, daß** das Kopfstück (1) unter Bildung einer längs durch den Kapselboden (11) verlaufenden Stoßfuge (16) der zusammengebogenen Ränder des das Kopfstück bildenden Blechstanzteils gebogen ist und daß am einen Rand mindestens eine sich erweiternde Lasche (11a) und am anderen Rand eine komplementäre Öffnung (11b) angeformt bzw. ausgestanzt ist, derart, daß durch die in die Öffnung (11b) eingreifende Lasche (11a) eine Formschlußverbindung zwischen den benachbarten Blechrändern hergestellt ist.

## Claims

1. Cable tie of metal, comprising a metal clamping band (2) and a head piece (1) punched from sheet metal and moulded in the shape of an oblong capsule which holds a blocking ball (3), where the clamping band (2) with its rear end (21) attached to the capsule base (11) of the head piece (1) can be pushed with its free end (23) over the capsule base (11) in the longitudinal direction through the capsule, and where the capsule contracts against the traction direction of the clamping band free end (23) from a cross-section holding the blocking ball (3) with play to a smaller cross-section causing the blocking ball to seize between the introduced clamping band free end (23) and the opposite capsule walls, and the capsule at its end with the wider cross-section has at least one element (13) preventing the blocking ball (3) from falling out, and where the capsule at its end with the narrower cross-section has an opening allowing the insertion of a tool to press out the blocking ball (3) from its clamped position, **characterised in that** the configuration of the cross-sectional shape of the capsule allows a certain resilient deflection of at least one capsule wall opposite the capsule base (11) and this capsule wall (14), in the clamped position of the blocking ball (3) with the clamping band free end (23) pushed through, has an opening (15) in which the blocking ball (3) can be locked in its clamped position.

2. Cable tie according to claim 1, **characterised in that** the capsule has an approximately triangular cross-sectional geometry with two side walls (14) running to an apex ridge over the capsule base (11) and in each of these two side walls is formed an opening (15) to lock the blocking ball (3).

3. Cable tie according to claim 1, **characterised in that** the capsule has an approximately rectangular or trapezoidal cross-sectional geometry with two side walls and a cover wall lying opposite the capsule base, and to reduce the capsule cross-section the cover wall runs at an angle to the capsule base (11) along the capsule length, and has the opening for locking the blocking ball (3).

4. Cable tie according to any of claims 1 to 3, **characterised in that** the capsule face end with the larger cross-section is blocked by bent tabs which are punched or moulded on the corresponding ends of the capsule side walls.

5. Cable tie according to any of claims 1 to 4, **characterised in that** the rear end (21) of the clamping band (2) is passed through the head piece (1) and bent around the capsule base (11), and with a bent and cut tab (22) lockingly engages in a capsule base opening (12), and **in that** the opening (12) in the capsule base (11) is a passage opening and the bent and cut tab (22) presses through the capsule base opening (12) against the clamping band (2) running on the inside of the capsule over the capsule base.

6. Cable tie according to any of claims 1 to 5, **characterised in that** the head piece (1) is bent forming a butt joint (16) between the folded edges of the metal stamping which forms the head piece, said joint running longitudinally through the capsule base (11), and **in that** on one edge at least one expanding tab (11a) and on the other edge a complementary opening (11b) are formed or punched respectively, such that the tab (11a) engaging in the opening (11b) creates a formfit connection between the adjacent metal edges.

## Revendications

1. Serre-câble en métal, comprenant une bande de serrage (2) ainsi qu'une tête (1) découpée et façonnée dans de la tôle métallique, ayant la forme d'une cassette allongée recevant une bille de blocage (3), dans lequel la bande de serrage (2), qui est fixée par son extrémité arrière (21) au fond de la cassette (11) formant la tête (1), s'étend avec son extrémité libre (23) à travers le fond de cassette (11) dans la direction longitudinale de la cassette, dans lequel la cassette se rétrécit dans la direction opposée à la direction de traction de l'extrémité libre (23) de la bande de serrage, depuis une section transversale admettant la bille de blocage (3) avec jeu, jusqu'à une section plus réduite provoquant le blocage de la bille entre l'extrémité libre de la bande de serrage (23) engagée et la paroi en vis-à-vis de la cassette, dans lequel la cassette, à son extrémité de section plus large, présente au moins un élément (13), qui empêche la bille de blocage (3) de s'échapper et dans lequel la cassette, à son extrémité à section plus étroite, présente une ouverture pour l'engagement d'un outil aux fins de repousser la bille de blocage (3) hors de sa position de blocage, **caractérisé en ce que** l'agencement de la forme en section transversale de la cassette permet une certaine déformation élastique d'au moins une paroi de la cassette en vis-à-vis du fond (11) et **en ce que** ladite paroi (14), dans la position de blocage de la bille de blocage (3) avec l'extrémité libre de la bande de serrage (23) engagée, présente une ouverture (15), dans laquelle la bille de blocage (3) peut s'encliqueter dans la position de blocage.

2. Serre-câbles selon la revendication 1, **caractérisé en ce que** la cassette a une forme en section transversale sensiblement triangulaire avec deux parois latérales (14) qui s'étendent en forme de toit en tabatière au-dessus du fond de cassette (11) et **en ce qu'**une ouverture (15) est aménagée dans chacune des deux parois latérales pour l'encliquetage de la bille de blocage (3).

3. Serre-câbles selon la revendication 1, **caractérisé en ce que** la cassette a une forme en section transversale sensiblement rectangulaire ou trapézoïdale avec deux parois latérales et une paroi de couverture en vis-à-vis du fond de cassette et **en ce que** la paroi de couverture, aux fins de réduire la section transversale de la cassette, est inclinée dans la direction longitudinale de la cassette par rapport au fond (11) et est pourvue de l'ouverture pour l'encliquetage de la bille de blocage (3).

4. Serre-câbles selon une des revendications 1 à 3, **caractérisé en ce que** l'extrémité frontale plus large de la cassette est barrée par des pattes pliées vers l'intérieur qui sont obtenues par découpage à la presse ou par façonnage.

5. Serre-câbles selon une des revendications 1 à 4, **caractérisé en ce que** l'extrémité arrière (21) de la bande de serrage (2) est engagée dans la cassette, est pliée autour du fond de cassette (11) et, à des fins de blocage, s'engage avec une patte découpée dans une ouverture (12) du fond, et en ce l'ouverture (12) dans le fond de cassette (11) est un trou débouchant et que la patte découpée (22) engagée dans l'ouverture (12) du fond appuie sur la bande de serrage (2) qui s'étend sur le fond de cassette, côté intérieur de la cassette.

6. Serre-câbles selon une des revendications 1 à 5, **caractérisé en ce que** la tête (1) est obtenue par pliage de la pièce en tôle découpée avec formation d'un joint (16) d'assemblage entre les bords pliés, qui s'étend longitudinalement dans le fond de cassette (11), et **en ce que** sur un bord, au moins une patte (11a) qui s'élargit et, sur l'autre bord, une ouverture (11b) complémentaire sont façonnées ou découpées, de telle sorte que la patte (11a) en s'engageant dans l'ouverture (11b) forme une liaison par complémentarité de formes entre les bords voisins de la tôle.
